# EUROPEAN PATENT APPLICATION

(11) **EP 4 786 964 A1**
(43) Date of publication of application: **05.08.2026**
(21) Application number: 26151231.3
(22) Date of filing: 12.01.2026
(51) Int. Cl.: G01N 25/72

(54) **METHOD AND SYSTEM FOR INSPECTING COOLING HOLES OF A TURBINE ENGINE COMPONENT**

(30) Priority: 31.01.2025 US 202519042225
(71) Applicant: General Electric Company, Cincinnati, Ohio 45215 (US)
(72) Inventor: WANG, Guanghua, Niskayuna, 12309 (US); TRIMMER, Andrew Lee, Niskayuna, 12309 (US); MANTKOWSKI, Thomas Edward, Evendale, 45215 (US)
(74) Representative: Openshaw & Co.

(57) **Abstract**

A method (200) of imaging a turbine engine component (68) with a thermographic sensor, the turbine engine component (68) having a first surface (86) and a second surface (89) spaced from the first surface (86), and a plurality of holes with inlets (94, 94a, 94b, 94c, 94d) formed in the second surface (89) and outlets (95, 95a, 95b, 95c, 95d) formed in the first surface (86). The method (200) including flowing air (202) through the turbine engine component (68) and obtaining, during the flowing of air (202), thermographic data (204) when the turbine engine component (68) and a thermograph sensor (126) are relatively orientated such that a viewing plane (140) and a centerline (110a, 110b, 100c, 110d) of the outlet (95, 95a, 95b, 95c, 95d) or a centerline (108a, 108b, 108c, 108d) of a cooling hole (92, 100, 100a, 100b, 100c, 100d) form and angle (152) in a range from 60° to 120°. A subset of the thermographic data is determined (206) and a flow score for the cooling hole (92, 100, 100a, 100b, 100c, 100d) is calculated (208), wherein the thermographic data subset, the flow score, or the thermographic data subset and the flow score are visually displayed (210).

## Description

### TECHNICAL FIELD

This disclosure relates to a method of imaging a turbine engine component using a thermographic sensor.

### BACKGROUND

Components of turbine engines, for example, turbine blades, can be exposed to extremely hot temperatures during operation of the engines. These blades can be provided with cooling holes that permit and direct the flow of a cooling fluid, such as cooler air, through and/or outside of the turbine blades. This cooling fluid can be directed outside of the blades by the cooling holes to provide a thermally protective film of air forming a barrier that prevents the blades from becoming too hot. Without the cooling holes and proper airflow through the cooling holes, the life cycle of the turbine blades can be shortened.

### BRIEF DESCRIPTION OF THE DRAWINGS

A full and enabling disclosure, including the best mode thereof, directed to one of ordinary skill in the art, is set forth in the specification, which refers to the appended figures in which:

In the drawings:
FIG. 1 is a schematic, sectional view of a gas turbine engine.
FIG. 2 is a schematic partial cutaway view of a blade of the gas turbine engine of FIG. 1 in accordance with an exemplary embodiment of the present disclosure.
FIG. 3 illustrates a subset of cooling holes of the blade of FIG. 2 in accordance with an exemplary embodiment of the present disclosure.
FIG. 4 illustrates an inspection system having a thermographic sensor for the blade of FIG. 2 in accordance with an exemplary embodiment of the present disclosure.
FIG. 5 illustrates a flowchart of a method of imaging a turbine engine component of FIG. 1 with a thermographic sensor in accordance with an exemplary embodiment of the present disclosure.
FIG. 6 illustrates an example image of thermographic data obtained from the thermographic sensor of FIG. 4 in accordance with an exemplary embodiment of the present disclosure.
FIG. 7 illustrates an example output from an output device of the inspection system of FIG. 4 in accordance with an exemplary embodiment of the present disclosure.

### DETAILED DESCRIPTION

Aspects and advantages of the disclosure will be set forth in part in the following description, or may be obvious from the description, or may be learned through practice of the disclosure herein.

Aspects of the present disclosure relates to a method of imaging a turbine engine component having a first surface and second surface spaced from the first surface, and a plurality of holes with inlets formed in the second surface and outlets formed in the first surface. Fluid (e.g., air) can be provided to the turbine engine component. At least a portion of the fluid enters a cooling hole of the plurality of cooling holes at an inlet in the first surface and exits the turbine engine component at the outlet of the hole at the second surface.

A thermographic sensor is specifically positioned relative to the turbine engine component to obtain thermographic data while the fluid is flowing through the turbine engine component. The turbine engine component and the thermograph sensor are positioned or relatively orientated such that a centerline of the outlet or a centerline of the cooling hole is orthogonal to a viewing plane of the thermographic sensor. Additionally, or alternatively, the angle between the centerline of the outlet or the centerline of the cooling hole and the viewing plane of the thermographic sensor can be in a range from 60° to 120°. For example, the angle between the centerline of the outlet or the centerline of the cooling hole and the viewing plane of the thermographic sensor can be in a range from 80° to 100°.

The thermographic data collected by the thermographic sensor is reduced to a subset. The subset of the thermographic data is thermographic data that has been determined corresponds to one or more cooling holes having a centerline of the outlet or a centerline of the cooling hole that is orthogonal to a viewing plane of the thermographic sensor. Additionally, or alternatively, the angle between the centerline of the outlet or the centerline of the cooling hole and the viewing plane of the thermographic sensor can be in a range from 60° to 120°. For example, the angle between the centerline of the outlet or the centerline of the cooling hole and the viewing plane of the thermographic sensor can be in a range from 80° to 100°.

A flow score for each of the one or more cooling holes is calculated based on the thermographic data subset. The thermographic data subset, the flow score, or the thermographic data subset and the flow score are then visually displayed. The visual display can include a representative or average image determined from the thermographic data subset. Shading, numerical values, frames, or masks can be used to provide a user with information related to the one or more cooling holes as a set or provide individual information related to each cooling hole of the one or more cooling holes included in the thermographic data subset.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As may be used herein, the terms "first," "second," "third," or "fourth" may be used interchangeably to distinguish one component from another and are not intended to signify location or importance of the individual components.

The term "fluid" may be a gas or a liquid, or a combination thereof. The term "fluidly coupled" means that a fluid is capable of making the connection between the areas specified. The term "fluidly exposed" means that one or more portions of an object is contacted by a fluid.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

The singular forms "a", "an", and "the" include plural references unless the context clearly dictates otherwise. Furthermore, as used herein, the term "set" or a "set" of elements can be any number of elements, including only one.

Uses of "and" and "or" are to be construed broadly. For example, and without limitation, uses of "and" do not necessarily require all elements or features listed, and uses of "or" are inclusive unless such a construction would be illogical.

Additionally, as used herein, a "controller" or "module" can include a component configured or adapted to provide instruction, control, operation, or any form of communication for operable components to effect the operation thereof. A module or controller module can include any known processor, microcontroller, or logic device, including, but not limited to: field programmable gate arrays (FPGA), an application specific integrated circuit (ASIC), a full authority digital engine control (FADEC), a proportional controller (P), a proportional integral controller (PI), a proportional derivative controller (PD), a proportional integral derivative controller (PID controller), a hardware-accelerated logic controller (e.g. for encoding, decoding, transcoding, etc.), the like, or a combination thereof. Non-limiting examples of a controller module can be configured or adapted to run, operate, or otherwise execute program code to effect operational or functional outcomes, including carrying out various methods, functionality, processing tasks, calculations, comparisons, sensing or measuring of values, or the like, to enable or achieve the technical operations or operations described herein. The operation or functional outcomes can be based on one or more inputs, stored data values, sensed or measured values, true or false indications, or the like. While "program code" is described, non-limiting examples of operable or executable instruction sets can include routines, programs, objects, components, data structures, algorithms, etc., that have the technical effect of performing particular tasks or implement particular abstract data types. In another non-limiting example, a controller module can also include a data storage component accessible by the processor, including memory, whether transient, volatile or non-transient, or non-volatile memory. Additional non-limiting examples of the memory can include Random Access Memory (RAM), Read-Only Memory (ROM), flash memory, or one or more different types of portable electronic memory, such as discs, DVDs, CD-ROMs, flash drives, universal serial bus (USB) drives, the like, or any suitable combination of these types of memory. In one example, the program code can be stored within the memory in a machine-readable format accessible by the processor. Additionally, the memory can store various data, data types, sensed or measured data values, inputs, generated or processed data, or the like, accessible by the processor in providing instruction, control, or operation to effect a functional or operable outcome, as described herein.

Additionally, as used herein, elements being "in communication" can be mechanically or electrically coupled. Furthermore, such electrical connections or couplings can include a wired or wireless connection, or a combination thereof.

Also, as used herein, while sensors can be described as "sensing" or "measuring" a respective value, sensing or measuring can include determining a value indicative of or related to the respective value, rather than directly sensing or measuring the value itself. The sensed or measured values can further be provided to additional components. For instance, the value can be provided to a controller module or processor as defined above, and the controller module or processor can perform processing on the value to determine a representative value or an electrical characteristic representative of said value.

All directional references (e.g., radial, axial, upper, lower, left, right, front, back, top, bottom, above, below, vertical, horizontal, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, and connected) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only. The dimensions, positions, order, and relative sizes reflected in the drawings attached hereto can vary.

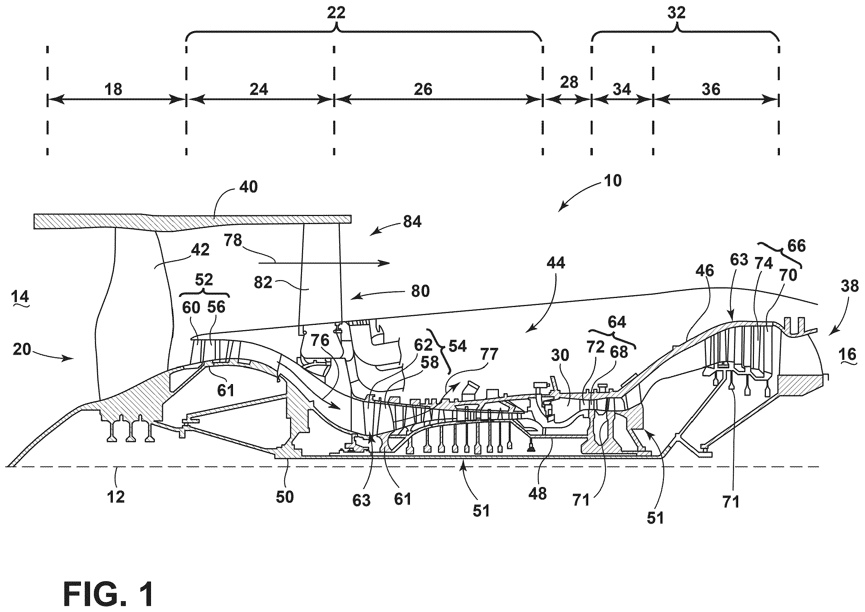

FIG. 1 is a schematic cross-sectional diagram of a gas turbine engine 10 for an aircraft. The gas turbine engine 10 has a longitudinally extending axis or centerline 12 extending from a forward direction 14 to an aft direction 16. The gas turbine engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including an HP turbine 34, and an LP turbine 36, and an exhaust section 38.

The fan section 18 includes a fan casing 40 surrounding the fan 20. The fan 20 includes a plurality of fan blades 42 disposed radially about the centerline 12. The HP compressor 26, the combustor 30, and the HP turbine 34 form a core 44 of the gas turbine engine 10, which generates combustion gases. The core 44 is surrounded by a core casing 46, which can be coupled with the fan casing 40.

An HP shaft or spool 48 disposed coaxially about the centerline 12 of the gas turbine engine 10 drivingly connects the HP turbine 34 to the HP compressor 26. An LP shaft or spool 50 is disposed coaxially about the centerline 12 and positioned within the larger diameter annular HP spool 48. The LP shaft or spool 50 drivingly connects the LP turbine 36 to the LP compressor 24 and fan 20. The HP and LP spools 48, 50 are rotatable about the centerline 12 and couple to a plurality of rotatable elements, which can collectively define a rotor 51.

The LP compressor 24 and the HP compressor 26 respectively include a plurality of compressor stages 52, 54, in which a set of compressor blades 56, 58 rotate relative to a corresponding set of static compressor vanes 60, 62 (also called a nozzle) to compress or pressurize the stream of fluid passing through the stage. In a single compressor stage 52, 54, multiple compressor blades 56, 58 can be provided in a ring and can extend radially outwardly relative to the centerline 12, from a blade platform to a blade tip, while the corresponding static compressor vanes 60, 62 are positioned upstream of and adjacent to the rotating compressor blades 56, 58. It is noted that the number of stages, blades, vanes, and compressor stages shown in FIG. 1 were selected for illustrative purposes only, and that other numbers are possible.

The compressor blades 56, 58 for a stage of the compressor can be mounted to a disk 61, which is mounted to the corresponding one of the HP and LP spools 48, 50, with each stage having its own disk 61. In an alternative, non-limiting example, the compressor blades 56, 58 may be part of a blisk, rather than being mounted to a disk. The static compressor vanes 60, 62 for a stage of the compressor can be mounted to the core casing 46 in a circumferential arrangement.

The HP turbine 34 and the LP turbine 36 include a plurality of turbine stages 64, 66, respectively, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 can be provided in an annular ring and can extend radially outwardly relative to the centerline 12, from a blade platform to a blade tip, while the corresponding static turbine vanes 72, 74 are positioned upstream of and adjacent to the rotating turbine blades 68, 70. It is noted that the number of stages, blades, vanes, and turbine stages shown in FIG. 1 were selected for illustrative purposes only, and that other numbers are possible.

The turbine blades 68, 70 for a stage of the turbine can be mounted to a disk 71, which is mounted to the corresponding one of the HP and LP spools 48, 50, with each stage having a dedicated disk 71. The static turbine vanes 72, 74 for a stage of the turbine can be mounted to the core casing 46 in a circumferential arrangement.

Complimentary to the rotor 51, the stationary portions of the gas turbine engine 10, such as the static compressor vanes 60, 62 and the static turbine vanes 72, 74 among the compressor and turbine sections 22, 32, are also referred to individually or collectively as a stator 63. As such, the stator 63 can refer to the combination of non-rotating elements throughout the gas turbine engine 10.

In operation, the airflow exiting the fan section 18 is split such that a portion of the airflow is channeled into the LP compressor 24, which then supplies a pressurized airflow 76 to the HP compressor 26, which further pressurizes the air. The pressurized airflow 76 from the HP compressor 26 is mixed with fuel in the combustor 30 and ignited, generating combustion gases. Some work is extracted from these gases by the HP turbine 34, which drives the HP compressor 26. The combustion gases are discharged into the LP turbine 36, which extracts additional work to drive the LP compressor 24, and an exhaust gas is discharged from the gas turbine engine 10 via the exhaust section 38. The driving of the LP turbine 36 drives the LP spool 50 to rotate the fan 20 and the LP compressor 24.

A portion of the pressurized airflow 76 can be drawn from the compressor section 22 as bleed air 77. The bleed air 77 can be drawn from the pressurized airflow 76 and provided to engine components utilizing cooling. The temperature of pressurized airflow 76 entering the combustor 30 is significantly increased above the bleed air temperature. The bleed air 77 may be used to reduce the temperature of the core components downstream of the combustor 30.

A remaining portion of the airflow exiting the fan section 18, bypasses the LP compressor 24 and the core 44 as a bypass airflow 78 and exits the gas turbine engine 10 through a stationary vane row, and more particularly an outlet guide vane assembly 80, comprising a plurality of airfoil guide vanes 82, at a fan exhaust side 84. More specifically, a circumferential row of radially extending airfoil guide vanes 82 are utilized adjacent the fan section 18 to exert some directional control of the bypass airflow 78.

Some of the air supplied by the fan 20 can bypass the core 44 and be used for cooling of portions, especially hot portions, of the gas turbine engine 10, and/or used to cool or power other aspects of the aircraft. In the context of the gas turbine engine 10, the hot portions of the engine are normally downstream of the combustor 30, especially the turbine section 32, with the HP turbine 34 being the hottest portion as it is directly downstream of the combustion section 28. Other sources of cooling fluid can be, but are not limited to, fluid discharged from the LP compressor 24 or the HP compressor 26.

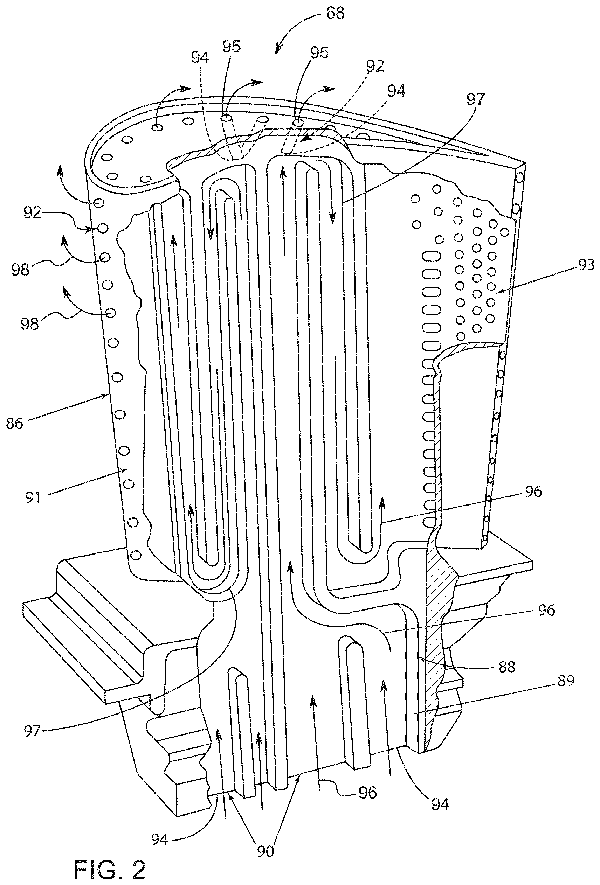

FIG. 2 is a perspective view of a component for a turbine engine where the component is in the form of the turbine blade 68 of the gas turbine engine 10 from FIG. 1. An exterior portion of the turbine blade 68 is removed to ease understanding of an interior portion of the turbine blade 68. Alternatively, the turbine engine component can include a HP compressor blade, a vane, a strut, a service tube, a shroud, or a combustion liner in non-limiting examples, or any other turbine engine component that can require or utilize cooling passages.

The turbine blade 68 includes a first surface spaced from a second surface. The turbine blade 68 includes an exterior surface 86 that binds an interior 88 defined by an interior surface 89. As illustrated by way of example, the first surface can be the interior surface 89 and the second surface can be the exterior surface 86.

At least a portion of the interior 88 can include at least one internal cooling circuit 90. A plurality of film holes or cooling holes 92 with inlets 94 fluidly couple the at least one internal cooling circuit 90 and outlets 95 formed in the exterior surface 86 of the turbine blade 68. Fluid 96 flowing through the at least one internal cooling circuit 90 can pass through interior baffles 97 of the turbine blade 68 and exit through the cooling holes 92 as exiting fluid 98. The fluid 96 can be any gas (such as oxygen, carbon dioxide, nitrogen, or some combination therein) that is at room temperature or an elevated temperature. For example, the fluid 96 can be air that is at or warmer than an ambient temperature outside of the turbine blade 68. The fluid 96 can be above ambient temperature during inspection of the cooling holes 92 but can be less than the temperature to which the turbine blade 68 is exposed during operation of the gas turbine engine 10 that includes the turbine blade 68. Alternatively, the fluid 96 can be at or below the ambient temperature. The fluid 96 optionally can be a liquid, such as water.

The turbine blade 68 can have at least one portion, illustrated by way of non-limiting example, as a first portion 91 and a second portion 93. While the first portion 91 and the second portion 93 can be similar, it is contemplated that the first portion 91 and the second portion 93 can be made of different materials or combinations of materials, have different thermal properties, include different structural elements, include different subsets of cooling holes 92, include overlapping subsets of cooling holes 92, or have different thickness or types of coatings. The first portion 91 and the second portion 93 can be distinct or overlapping regions or portions of the turbine blade 68. Further, the material or materials that make up the first portion 91 and the second portion 93 can be uniform throughout the respective first portion 91 or second portion 93. However, it is contemplated that the material or materials that make up the first portion 91 and the second portion 93 are not uniform throughout the respective portion or region.

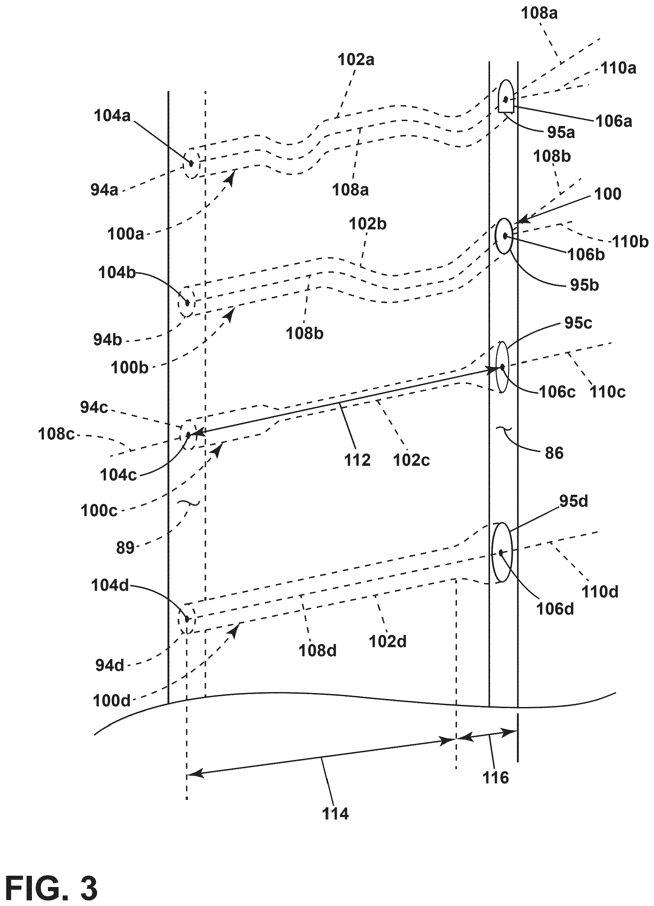

FIG. 3 schematically illustrates a subset of film holes or a subset of cooling holes. The subset of film holes or the subset of cooling holes is illustrated, by way of example, as the set of cooling holes 100 having a first cooling hole 100a, a second cooling hole 100b, a third cooling hole 100c, and a fourth cooling hole 100d.

The set of cooling holes 100 could be a representative subset the cooling holes 92 of FIG. 2 or a representative subset of cooling holes or film holes in any one or more portions of a turbine engine component of the gas turbine engine 10 (FIG. 1).

The first cooling hole 100a, the second cooling hole 100b, the third cooling hole 100c, and the fourth cooling hole 100d each include a corresponding inlet 94a, 94b, 94c, 94d at the interior surface 89 and corresponding outlet 95a, 95b, 95c, 95d at the exterior surface 86. Cooling passages 102a, 102b, 102c, 102d extend between each of the inlets 94a, 94b, 94c, 94d and each of the respective outlets 95a, 95b, 95c, 95d.

The inlets 94a, 94b, 94c, 94d include geometric centers illustrated as inlet centroids 104a, 104b, 104c, 104d. The inlet centroids 104a, 104b, 104c, 104d are the geometric center of a two-dimensional shape defined by the inlet 94a, 94b, 94c, 94d. As illustrated, by way of example, the inlets 94a, 94b, 94c, 94d can vary in shape and size.

The outlets 95a, 95b, 95c, 95d include geometric centers illustrated as outlet centroids 106a, 106b, 106c, 106d. The outlet centroids 106a, 106b, 106c, 106d are the geometric center of a two-dimensional shape defined by the outlets 95a, 95b, 95c, 95d. As illustrated, by way of example, the outlets 95a, 95b, 95c, 95d can vary in shape and size. It is also contemplated that the inlets 94a, 94b, 94c, 94d can vary in shape and size from their corresponding outlets 95a, 95b, 95c, 95d.

Cooling hole centerlines 108a, 108b, 108c, 108d are defined as centerlines of the cooling passages 102a, 102b, 102c, 102d. The cooling hole centerlines 108a, 108b, 108c, 108d can intersect the inlet centroids 104a, 104b, 104c, 104d and the outlet centroids 106a, 106b, 106c, 106d.

As illustrated, by way of example, the cooling hole centerline 108a, 108b, 108c, and 108d can extend or be an extrapolated past the outlet centroids 106a, 106b, 106c, 106d. The portion of the cooling hole centerline 108a, 108b, 108c, 108d that extends past the outlet centroids 106a, 106b, 106c, 106d is in the same direction as an inner portion of the cooling hole centerline 108a, 108b, 108c, 108d that is between the inlet centroids 104a, 104b, 104c, 104d and the outlet centroids 106a, 106b, 106c, 106d, wherein the inner portion of the cooling hole centerline 108a, 108b, 108c, 108d used to determine the direction of the cooling hole centerline 108a, 108b, 108c, 108d extrapolated past the outlet centroid 106a, 106b, 106c, 106d is a distance that is 10% or less of a cooling hole length 112 from the outlet centroids 106a, 106b, 106c, 106d. Viewing along the cooling hole centerline 108a, 108b, 108c, 108d from the respective outlet 95a, 95b, 95c, 95d in the direction of the cooling hole centerline within 10% or less of a cooling hole length 112 can provide visual inspection and information related to at least a portion of the cooling passage 102a, 102b, 102c, 102d.

The cooling hole length 112 is measured between the inlet centroids 104a, 104b, 104c, 104d and the outlet centroids 106a, 106b, 106c, 106d. The cooling hole length 112 can be measure along a line segment (shortest distance between two points) from the inlet centroids 104a, 104b, 104c, 104d to the outlet centroids 106a, 106b, 106c, 106d.

Alternativity, the cooling hole length 112 can be measured along the cooling hole centerlines 108a, 108b, 108c, 108d from the inlet centroids 104a, 104b, 104c, 104d to the outlet centroids 106a, 106b, 106c, 106d.

The centerline of the outlet, illustrated as outlet centerlines 110a, 110b, 110c, 110d, are defined at the outlet centroids 106a, 106b, 106c, 106d orthogonal to the plane of the exterior surface 86 at the respective outlet 95a, 95b, 95c, 95d. As illustrated by the third cooling hole 100c and the fourth cooling hole 100d, the cooling hole centerlines 108c, 108d can overlap the outlet centerlines 110c, 110d. Alternatively, as illustrated by the first cooling hole 100a and the second cooling hole 100b, the cooling hole centerlines 108a, 108b can form a non-zero angle with the outlet centerlines 110a, 110b. Viewing along the outlet centerlines 110a, 110b, 110c, 110d into the respective outlets 95a, 95b, 95c, 95d can provide information regarding at least a portion of the cooling passages 102a, 102b, 102c, 102d.

Optionally, one or more of the cooling passages 102a, 102b, 102c, 102d can include a metering portion 114 and diffusion portion 116. A metering portion 114 is illustrated as having a circular cross section, though it could have any cross-sectional shape. The metering portion 114 defines the smallest, or minimum cross-sectional area of the cooling passage 102a, 102b, 102c, 102d. The metering portion 114 can meter the mass flow rate of the air that flows through the first, second, third, or fourth cooling hole 100a, 100b, 100c, 100d. The diffusion portion 116 exists if there is a portion of the cooling passage 102a, 102b, 102c, 102d with a maximum cross-sectional area greater than the cross-sectional area of the metering portion 114. The metering portion 114 can have a continuously increasing cross section, as illustrated in the fourth passage 102d. In yet another implementation, the cross-sectional area can vary along the extent of the cooling passage 102a, 102b, 102c, 102d to define multiple metering and diffusion portions.

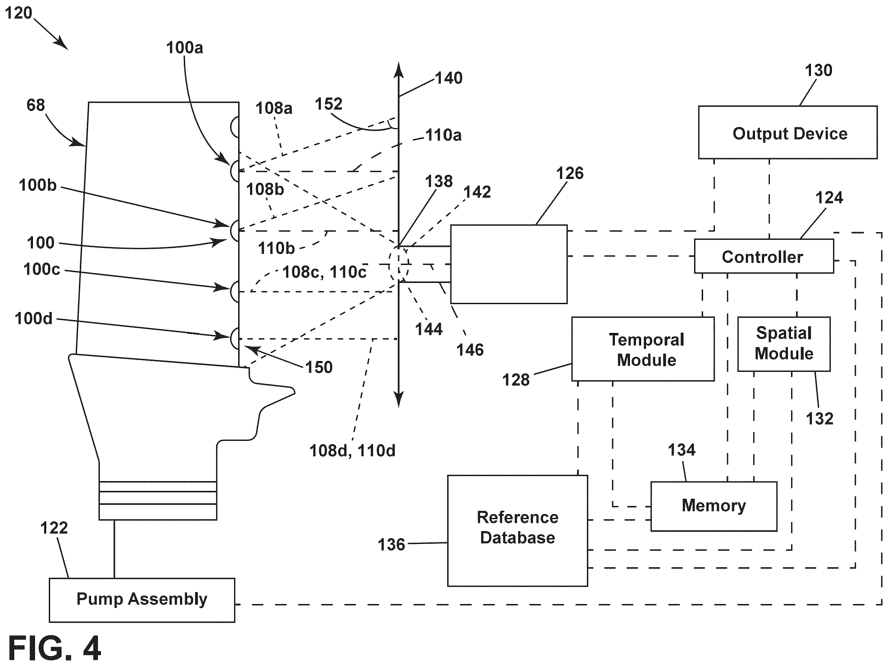

FIG. 4 illustrates one example of an inspection system 120. The inspection system 120 can be used to image a turbine engine component of the gas turbine engine 10 (FIG. 1) or at least one portion of the turbine engine component. Similar to FIG. 2 and FIG. 3, the turbine engine component is illustrated in FIG. 4, by way of non-limiting example, as the turbine blade 68. The images captured by the inspection system 120 can be used to obtain thermographic data that corresponds to at least one portion of the turbine engine component or the turbine blade 68.

The inspection system 120 can include a pump assembly 122 that is fluidly coupled to the turbine blade 68, a controller 124, a thermographic sensor 126, and an output device 130. The controller 124 includes hardware circuitry that includes and/or is connected with one or more processors (e.g., one or more microprocessors, one or more field programmable gate arrays, and/or one or more integrated circuits) that control operations described in connection with the controller 124. The controller 124 can be any number of controllers in communication with at least one or more of the pump assembly 122, the thermographic sensor 126, or the output device 130.

A spatial module 132 can be included with the controller 124 or in communication with controller 124. Similarly, a thermographic module or temporal module 128 can be included with the controller 124 or in communication with the controller 124. Further, a memory 134 or a reference database 136 can be included with the controller 124 or in communication with controller 124. It is contemplated that the temporal module 128 or the spatial module 132 can be in communication with one or more of the memory 134 or the reference database 136. It is also contemplated that the temporal module 128 or the spatial module 132 can be in communication with the output device 130.

The temporal module 128 can process image data of at least a portion of the turbine blade 68. For example, temperature ranges or temperate changes can be represented by a coloring or color gradient of each pixel or group of pixels by the temporal module 128. The temporal module 128 can analyze each frame of the image data or combine multiple frames to provide an average or normalized image. The temporal module 128 can be provided with reference data to which the frame or multiple frames of image data are compared. Additionally, or alternatively, each processed frame or average or normalized image from the temporal module 128 can be compared to reference data. A subset of the thermographic data can be determined using the reference data.

Optionally, the spatial module 132 can be used with the temporal module 128. The spatial module 132 can be used with the temporal module 128 prior to the image data analysis, during subset of the temporal data analysis, after the subset of the thermographic data analysis, or any combination thereof.

When used prior to or during the image data analysis of the temporal module 128, the spatial module 132, for example, can determine the orientation and/or location of the turbine blade 68 for which the image data was collected. This can be done on a frame by frame basis or representative frames selected by the temporal module 128 or the spatial module 132. The spatial module 132 can provide reference data from the memory 134 or the reference database 136 and/or locate a region of interest that can narrow the analysis region of the temporal module 128 or determine a subset of the thermographic data. The reference data can be done on a frame by frame basis or representative frames selected by the temporal module 128 or the spatial module 132.

When used during or after the image data analysis of the temporal module 128, it is contemplated that the spatial module 132 can receive an analyzed or partially analyzed frame or a normalized image from the temporal module 128. The spatial module 132 can determine the orientation and/or location of the turbine blade 68 for each analyzed pr partially analyzed frame of the thermographic data or the normalized image of the thermographic data. The spatial module 132 can provide a reference frame having thermographic data from the memory 134 or the reference database 136. The spatial module 132 cand/or locate a region of interest that can narrow the analysis region of the temporal module 128.

That is, information can be passed between the spatial module 132 and the temporal module 128 to assist, refine, or provide reference data prior to, during, or after image processing by the temporal module 128 to determine the thermographic data and/or a subset of the thermographic data.

The spatial module 132 can provide a spatial score for one or more portions of the turbine blade 68. For example, the spatial module 132

Further, the inspection system 120 can be used to obtain airflow values, for example of each cooling hole of the set of cooling holes 100. The inspection system 120 can provide, at the output device 130, a dataset that can include airflow values for each cooling hole of the set of cooling holes 100, a dataset for a subset of the set of cooling holes 100, or data, such as average airflow, based on the set of cooling holes 100 or the subset of the set of cooling holes 100.

The thermographic sensor 126 can be, by way of non-limiting example, an infrared camera. The thermographic sensor 126 can have an input portion 138 that can include, for example, a lens 142 or other image processing component through which electromagnetic waves are directed into the thermographic sensor 126.

A viewing plane 140 can be located at the input portion 138 or along any one or more portions of the thermographic sensor 126. While illustrated as a line, the viewing plane 140 can extend into and out of the page such that the viewing plane 140 is two-dimensional. By way of non-limiting example, the viewing plane 140 can be defined by a first dimension along a vertical axis 144 of the lens 142 and a second direction that is orthogonal to a primary axis 146 of the lens 142. In another non-limiting example, the viewing plane 140 can be defined at or by a distal end ring of a zoom ring of the thermographic sensor 126.

A viewing region 150 can be defined as a portion of the turbine blade 68 for which the thermographic sensor 126 obtains data. As illustrated, by way of example, the first cooling hole 100a, the second cooling hole 100b, the third cooling hole 100c, and the fourth cooling hole 100d are located in the viewing region 150.

An angle 152, is illustrated by way of example, as measured between the cooling hole centerlines 108a, 108b, 108c, 108d and the viewing plane 140 of the thermographic sensor 126. Additionally, or alternatively, the angle 152 can be measured between the outlet centerlines 110a, 110b, 110c, 110d and the viewing plane 140.

The thermograph sensor 126 can be oriented such that the outlet centerlines 110a, 110b, 110c, 110d, the cooling hole centerlines 108a, 108b, 108c, 108d, a subset of outlet centerlines 110a, 110b, 110c, 110d, a subset of the cooling hole centerlines 108a, 108b, 108c, 108d, or any combination thereof are orthogonal to the viewing plane 140 of the thermographic sensor 126. Alternatively, the thermograph sensor 126 can be oriented such the outlet centerlines 110a, 110b, 110c, 110d, the cooling hole centerlines 108a, 108b, 108c, 108d, a subset of outlet centerlines 110a, 110b, 110c, 110d, a subset of the cooling hole centerlines 108a, 108b, 108c, 108d, or any combination thereof and the viewing plane 140 of the thermographic sensor 126 form an angle or angles in a range of 60° to 120°, which can be, by way of further example in a range between 80° to 100°.

By way of non-limiting example, the outlet centerlines 110a, 110b, 110c, 110d are orthogonal to the viewing plane 140 and a first cooling hole centerline subset 108c, 108d of the cooling hole centerlines 108a, 108b, 108c, 108d overlap with the outlet centerlines 110c, 110d and are also orthogonal to the viewing plane 140. By way of example, a second cooling hole centerline subset 108a, 108b can form an angle with the viewing plane 140 that is not equal to 90°.

By way of example, the second cooling hole centerline subset 108a, 108b can form an angle with the viewing plane 140 that is less than 60° or greater than 120°, while the first cooling hole centerline subset 108c, 108d can form an angle with the viewing plane 140 that is in a range of 60° to 120°. A further non-limiting example includes the second cooling hole centerline subset 108a, 108b can form an angle with the viewing plane 140 that is less than 80° or greater than 100°, while the first cooling hole centerline subset 108c, 108d can form an angle with the viewing plane 140 that is in a range of 80° to 100°.

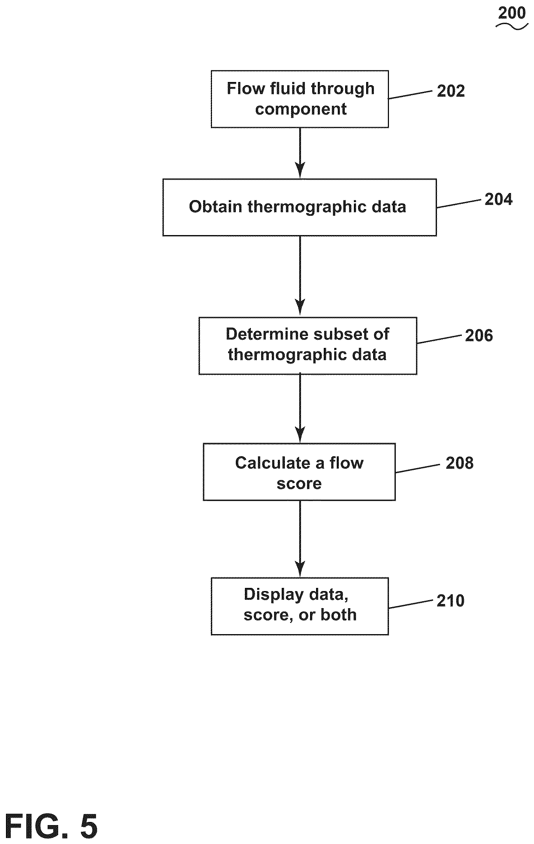

With continued reference to the turbine blade of FIG. 2, the set of cooling holes 100 of FIG. 3 and the inspection system 120 of FIG. 4, FIG. 5 illustrates a flowchart of a method 200 of imaging the turbine engine component or the turbine blade 68 having at least the set of cooling holes 100.

At 202, a fluid such as air, can flow through at least one portion of the turbine blade 68. The fluid can be pumped or otherwise forced into the at least one internal cooling circuit 90 of the blade 68 by the pump assembly 122 of the inspection system 120. The pump assembly 122 can include one or more pumps that are fluidly coupled with the at least one internal cooling circuit 90 by one or more conduits. The pump assembly 122 also can be coupled with a source of the fluid, such as an inlet and optional filters that collect ambient air for pumping into the at least one internal cooling circuit 90 as the fluid. Alternatively, the pump assembly 122 can be coupled with a tank or container of the fluid. At least a portion of the fluid forced into the at least one internal cooling circuit 90 by the pump assembly 122 flow into at least one cooling hole 100a, 100b, 100c, 100d of the set of cooling holes 100 at the inlet 94a, 84b, 94c, 94d at the interior surface 89 and exits the turbine blade 68 at the outlet 95a, 95b, 95c, 95d at the exterior surface 86.

By way of example, the controller 124 can communicate with the pump assembly 122 to provide fluid to the turbine blade 68. The fluid can be any gas (such oxygen, carbon dioxide, nitrogen, or some combination therein) that is at room temperature or an elevated temperature. For example, the fluid can be air that is at or warmer than an ambient temperature outside of the turbine blade 68. The fluid can be above ambient temperature during inspection of the set of cooling holes 100 but can be less than the temperature to which the turbine blade 68 is exposed during operation of the gas turbine engine 10 (FIG. 1) that includes the turbine blade 68. Alternatively, the fluid can be at or below the ambient temperature. The fluid optionally can be a liquid, such as water.

The turbine blade 68 prior to or during the flowing of the fluid can be an ambient temperature. Additionally, or alternatively, the turbine blade 68 can be cooled or heated prior to or during the flowing of the fluid.

The fluid can be provided by the pump assembly 122 to the turbine blade 68. The pump assembly 122 can provide, for example, pulses of air to the turbine blade 68. The pulse of fluid can be provided at one or more frequencies or repetition rates. That is, the air flowing through the turbine blade 68 includes multiple pulses of air at a predetermined pulse frequency.

Optionally, the air can be compressed or have a predetermined pressure. The pressure can vary between pulses and can be controlled by the controller 124. Alternatively, the fluid flow provided by the pump assembly 122 to the turbine blade 68 can be at a constant rate or constant pressure.

At 204, thermographic data is obtained during the flowing of the fluid by the thermographic sensor 126. Additionally, the thermographic data for the at least one cooling hole 100a, 100b, 100c, 100d of the set of cooling holes 100 is obtained when the turbine blade 68 and the thermograph sensor 126 are positioned such that the outlet centerlines 110a, 110b, 110c, 110d or the cooling hole centerlines 108a, 108b, 108c, 108d of the at least one cooling hole 100a, 100b, 100c, 100d of the set of cooling holes 100 are orthogonal to the viewing plane 140 of the thermographic sensor 126.

Optionally, at 204, it is contemplated that the thermographic sensor 126 can be positioned or relatively oriented such that the angle between the outlet centerlines 110a, 110b, 110c, 110d or the cooling hole centerlines 108a, 108b, 108c, 108d of the at least one cooling hole 100a, 100b, 100c, 100d of the set of cooling holes 100 and the viewing plane 140 of the thermographic sensor 126 is in a range from 60° to 120°. It is further contemplated that the thermograph sensor 126 can be positioned such that the angle between the outlet centerlines 110a, 110b, 110c, 110d or the cooling hole centerlines 108a, 108b, 108c, 108d of the at least one cooling hole 100a, 100b, 100c, 100d of the set of cooling holes 100 and the viewing plane 140 of the thermographic sensor 126 is in a range from 80° to 100°.

The thermographic data can include a video, static images, or a combination thereof, that indicates temperatures with respect to the set of cooling holes 100 of the turbine blade 68. The thermographic data can be saved in or on a tangible and non-transitory computer-readable storage medium, such as the memory 134. This memory 134 can represent one or more computer hard drives, optical discs, removable discs, or the like.

The controller 124 can be in communication with the thermographic sensor 126. The thermographic sensor 126 can be, by way of non-limiting example, an infrared camera that obtains images while fluid is flowing through at least the set of cooling holes 100. The images can be gathered at a sampling frequency determined by the controller 124. The sampling frequency in which the thermographic sensor 126 obtains images can be based on the fluid frequency provided by the pump assembly 122. That is, the thermographic sensor obtains data during the multiple pulses of air at a sampling frequency based on the predetermined pulse frequency. The images captured by the thermographic sensor 126 can be stored or evaluated at the controller 124.

The captured video or collection of images can be obtained at one or more different frame rates, such as frame rates between five frames per second and 30,000 frames per second, or the like. The thermographic data can be a video sequence of these temperature fluctuations for several pulses of the fluid or a preset length of time. Optionally, the video sequence can be referred to as a data cube, and can be provided to one or more temporal modules 128 of the inspection system 120. The thermographic data can represent temperature fluctuations of the set of cooling holes 100 at or near the outlets 95.

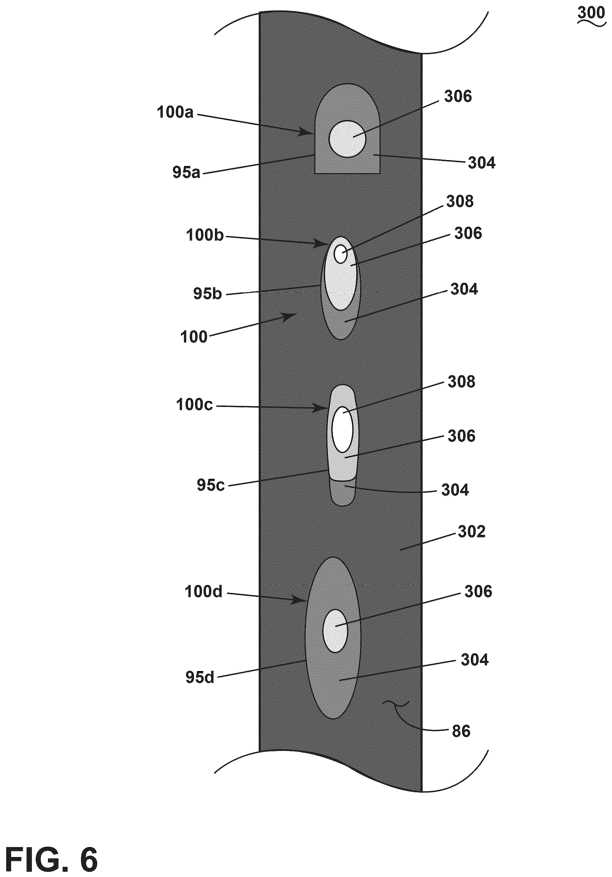

FIG. 6 illustrates an image 300, for example, of the thermographic data obtained from the thermographic sensor 126 (FIG. 4). The example image 300 illustrates a portion of the turbine blade 68 in the viewing region 150 (FIG. 4). By way of non-limiting example, image 300 includes the set of cooling holes 100 with the outlets 95a, 95b, 95c, 95d at the exterior surface 86. By way of example the image 300 was obtained by the thermographic sensor 126 (FIG. 4), by way of example, having the viewing plane 140 (FIG. 4) orthogonal to the outlet centerlines 110a, 110b, 110c, 110d (FIG. 4).

The brightness in the image 300 can be indicative of a temperature or predetermined temperature range. By way of non-limiting example, portions of the exterior surface 86 can be a first temperature or a first range 302. A second temperature or a second range 304, can be different than the first range 302. A third temperature or a third range 306 can be different than the first and second ranges 302, 304 and a fourth temperature or a fourth range 308 can be different than the first, second, and third ranges 302, 304, 306. Optionally, the fourth range 308 can indicate a temperature anomaly. It is contemplated that the coolest temperature can be in the fourth range 308, indicating a high airflow, while the warmest temperate can be in the first range 302, indicating low or no airflow. While illustrated as having four temperature ranges, any number of two or more ranges are contemplated.

The image 300 is taken while air, for example, is pulsed through the turbine blade 68. Therefore, the first, second, third, and fourth ranges 302, 304, 306, 308 being temperature driven can be indicative of the air flowing through at least a portion of the cooling passages 102a, 102b, 102c, 102d (FIG. 3), the outlets 95a, 95b, 95c, 95d, or a combination thereof.

Alternatively, in a different and non-limiting example, the thermographic sensor 126 could gather thermographic data based on an orientation between the viewing plane 140 and the cooling hole centerlines 108a, 108b, 108c, 108d, where the thermographic sensor 126 could change the viewing region 150. For example, in the current orientation, the third and fourth cooling holes 100c, 100d are illustrated as having the cooling hole centerlines 108c, 108d that are orthogonal to the viewing region 150. The thermographic sensor 126 could change the viewing region 150 to include just the third and fourth cooling holes 100c, 100d.

In still yet another non-limiting example, since the angle between the cooling hole centerlines 108a, 108b and the viewing plane 140 is less than 90°, the image data obtained for the first and second cooling holes 100a, 100b could be removed or discounted in another portion of the method 200.

That is, while illustrated as obtaining thermographic data for the set of cooling holes 100, it is contemplated that thermographic data can be obtained for any number of cooling holes, including one.

Returning to the description of the flowchart of the method 200 shown in FIG. 5, while considering the set of cooling holes 100 in FIG. 3 and the inspection system 120 of FIG. 4, at 206, a subset of the thermographic data defines a thermographic data subset that corresponds to one or more cooling holes in the viewing region 150 is determined. The thermographic data subset can include one or more cooling holes in the viewing region 150 having an outlet centerline or a cooling hole centerline orthogonal to the viewing plane 140.

Optionally, at 206, it is contemplated that the thermographic data subset can include one or more cooling holes in the viewing region 150 having an outlet centerline or a cooling hole centerline that forms an angle with the viewing plane 140 in a range from 60° to 120°. It is further contemplated that the thermographic data subset can include one or more cooling holes in the viewing region 150 having an outlet centerline or a cooling hole centerline that forms an angle with the viewing plane 140 in a range from 80° to 100°.

As illustrated, by way of example, the thermographic data subset can include the first, second, third, and fourth cooling holed 100a, 100b, 100c, 100d, if based on one or more of the outlet centerlines 110a, 110b, 110c, 110d or the cooling hole centerlines 108a, 108b, 108c, 108d intersecting the viewing plane 140 orthogonally. Alternatively, the thermographic data subset can include the third cooling hole 100c and the fourth cooling hole 100d, if based on the cooling hole centerlines 108c, 108d intersecting the viewing plane 140 orthogonally.

It is contemplated that the thermographic data subset can be determined at the controller 124, the spatial module 132, or combination thereof. The controller 124, the spatial module 132, or combination thereof can further access the reference database 136, the memory 134, or combination thereof to determine the subset of the thermographic data.

It is further contemplated that the determination of the thermographic data subset can further include use input. For example, one or more thermographic images or combinations of thermographic images can be displayed on the output device 130. The user can then select the thermographic data subset from the provided thermographic image or images. It is also contemplated that a user can select from recommended thermographic data subsets provided at the output device 130.

Once the thermographic data subset is obtained at 206, at 208 a flow score is calculated based on the thermographic data subset. By way of non-limiting example, we will consider the set of cooling holes 100 as included in the thermographic data subset.

The inspection system 120 can process the thermographic data subset to determine the flow score for each of the first, second, third, and fourth cooling holes 100a, 100b, 100c, 100d. For example, the inspection system 120 can independently process the time domain of the thermographic data subset associated with each pixel (or other unit of data or display) in a video sequence of the thermographic data subset. This processing can collapse or otherwise reduce the thermographic data subset cube (of the changing pixel data over time) into a single normalized image having pixel values represent scores later used to determine the flow score for each of the first, second, third, and fourth cooling holes 100a, 100b, 100c, 100d. The pixel values of the normalized image can be visually represented, for example, in grayscale as illustrated in FIG. 6.

The spatial processing of the thermographic data registers the thermographic data subset to find the location of the first, second, third, and fourth cooling holes 100a, 100b, 100c, 100d. Specifically, the spatial processing of the thermographic data registers the outlets 95a, 95b, 95c, 95d of the first, second, third, and fourth cooling holes 100a, 100b, 100c, 100d. Unlike traditional methods, the inspection system 120 does not consider only a region of interest extending around an outlet, rather the inspection system 120 is concerned with the outlets 95a, 95b, 95c, 95d of the first, second, third, and fourth cooling holes 100a, 100b, 100c, 100d and the portion of the cooling passaged 102a, 102b, 102c, 102d that is detectable at the outlets 95a, 95b, 95c, 95d. Optionally, the region of interest around the outlet can be identified and included in the flow score, but the flow score is not solely based on the analysis of the region of interest. Rather, the flow score includes the portion of the cooling passaged 102a, 102b, 102c, 102d that is detectable at the outlets 95a, 95b, 95c, 95d as a result of the intention orientation described herein between the viewing plane 140 and the outlet centerlines 110a, 110b, 110c, 110d or cooling hole centerlines 108a, 108b, 108c, 108d. The orientation can be an orthogonal orientation between the viewing plane 140 and the outlet centerlines 110a, 110b, 110c, 110d or cooling hole centerlines 108a, 108b, 108c, 108d. Additionally, or alternatively the orientation between the viewing plane 140 and the outlet centerlines 110a, 110b, 110c, 110d or cooling hole centerlines 108a, 108b, 108c, 108d can form an angle in a range from 60° to 120°. By way of non-limiting example, the angle can be in a range from 80° to 100°.

The temporal module 128 can calculate a temporal score for each pixel associated with each of the first, second, third, and fourth cooling holes 100a, 100b, 100c, 100d. The temporal score can be calculated using thermographic video data for each pixel processed using statistical analysis, fast Fourier transform (FFT), Principle Component Analysis (CPA), Thermographic Signal Reconstruction (TSR), wavelet transformation, or any combination therein. The temporal scores for each pixel can be stored in the memory 134.

For example, the temporal score for each pixel can be an average temperature of the pixel taken from multiple frames over a predetermined amount of time. By way of further non-limiting example, thermal imaging data or temperature can be represented by various frequencies within a signal, where FFT essentially provides a measure of how prominent specific frequencies are within that signal. That is, the signal can be driven by multiple frames, or all the thermogenic data from a single frame where the temporal score as a numerical value from the FFT provides each pixel with a temporal score that is in comparison to multiple frames of that pixel, or in relation to all pixels in a specific frame.

Additionally, or alternatively, the temporal module 128 can analyze, filter, or otherwise process the thermographic video data before determining the temporal score. For example, the temporal module 128 can include one or more of a high-pass filter, a low-pass filter, or other filtering electronics based on a signal-to-noise ratio, that can optionally be applied to the thermographic video data that is raw data, detrended data, filtered data, or normalized data.

The temporal score can be determined using the variation in the temperature in a region identified by the spatial processor as located at or within the boundaries of the outlet 95a, 95b, 95c, 95d of the first, second, third, and fourth cooling holes 100a, 100b, 100c, 100d, where the variation of temperature is described by the first, second, third, and fourth ranges 302, 304, 306, 308 (FIG. 6). The variation of temperature is described by the first, second, third, and fourth ranges 302, 304, 306, 308 can illustrate a temperature gradient at the outlet 95a, 95b, 95c, 95d illustrating a variety of air temperatures exiting the first, second, third, and fourth cooling holes 100a, 100b, 100c, 100d.

For example, the first, second, third, and fourth ranges 302, 304, 306, 308 (FIG. 6) can be determined by peak temperatures, average temperatures, or temperature differences for each pixel over a predetermined length of time. By way of further non-limiting example, let the first, second, third, and fourth ranges 302, 304, 306, 308 be indicative of a change in temperature per pixel, where the shading of the pixel is indicative of a range of changes in temperature. Optionally, the ranges of temperature change can correspond to a temporal score and are illustrated by grayscale in FIG. 6.

The temporal score can be used to determine the flow score for each of the first, second, third, and fourth cooling holes 100a, 100b, 100c, 100d. Additionally, or alternatively, the flow score can be calculated using any intensity differences within the thermographic data subset or additional image processing that provides the flow score indicative of the airflow through the cooling holes the first, second, third, and fourth cooling holes 100a, 100b, 100c, 100d at the outlets 95a, 95b, 95c, 95d. The intensity differences can be a comparison of intensity across a single cooling hole looking for "bright spots" or regions where the temperature or flow rate is significantly different than other portions of the cooling. That is, the brightness of each pixel can be assigned to a numerical value. Differences between the numerical values (e.g., 150 brightness of a first pixel in a first frame - 50 brightness of a second pixel in a first frame) of the pixels at predetermined locations can provide an intensity difference. Alterntaviely, the brightness of each pixel can be assigned a numerical value and an intensity difference can be calculated or averaged between one or more frames (e.g., 150 brightness of a first pixel in a first frame - 140 brightness of the first pixel in a second frame). Alternatively, or additionally, comparing intensity differences can include comparing the intensity of the cooling hole to a reference intensity of the cooling hole and calculating a difference. That is, the brightness of each pixel can be assigned a numerical value and an intensity difference can be calculated or averaged between the pixel and a pixel of a reference image (e.g., 150 brightness of a first pixel in a first frame - 147 brightness of the pixel of the reference image).

For example, the thermographic data subset including the first, second, third, and fourth cooling holes 100a, 100b, 100c, 100d can receive a flow score based on, for example, comparisons of the first, second, third, and fourth ranges 302, 304, 306, 308 (FIG. 6). By way of further non-limiting example the thermographic data for the first cooling hole 100a can be 85-15-0, indicating that the second range 304 is 85% of the area of the shaded area of the outlet 95a, the third range 306 is 15% of the area of the shaded area of the outlet 95a, and that the fourth range 308 is 0% of the area of the shaded area of the outlet 95a. The thermographic data for the second cooling hole 100b can be 44.6-49.6-5.8, indicating that the second range 304 is 44.6% of the area of the shaded area of the outlet 95b, the third range 306 is 49.6% of the area of the shaded area of the outlet 95b, and that the fourth range 308 is 5.8% of the area of the shaded area of the outlet 95b.

While illustrated as a series of numbers, the thermographic data can be any numerical value that expresses an increase or decrease of temperature at one or more locations of the first, second, third, or fourth cooling holes 100a, 100b, 100c, 100d.

The flow score can be based on the thermographic data for each cooling hole.

Optionally, flow score can include a spatial score from the spatial module 132. The spatial score can be, for example, for the first, second, third, and fourth cooling holes 100a, 100b, 100c, 100d based on the spatial extent of the thermographic response of the first, second, third, and fourth cooling holes 100a, 100b, 100c, 100d. By way of further non-limiting example, the spatial score can be determined by the special matching of the first, second, third, and fourth cooling holes 100a, 100b, 100c, 100d to reference data. For example, the first cooling hole 100a can have a spatial score of 95% indicating a 95% match to the reference data for the first cooling hole 100a and the spatial score for the second cooling hole 100b can be 70% indicating a 70% match to the reference data for the second cooling hole 100b.

While illustrated as percentages, spatial score can be any numerical value based on location and/or thermographic data that expresses an increase or decrease of air flowing through the passages.

It is contemplated that the temporal module 128, the spatial module 132, or combination can be used to determine the flow score of the thermographic data subset gathered during multiple pulses of air at the sampling frequency.

For example, for the first cooling hole 100a, the temporal score of 85-15-0 can be used to determine the flow score, or the spatial score of 95% can be used to determine the flow score, or a combination of the temporal score of 85-15-0 and the spatial score of 95% can be used to determine the flow score.

For example, the temporal score of 85-15-0 can be combined with the spatial score of 95% to result in a flow score of 90; obtained by averaging the 85% of the temporal score and the 95% of the spatial score and subtracting the 0% percent in the fourth range.

Similarly, using the same example for illustrative purposes, if combining the temporal score and the spatial score for the second cooling hole 100b the second cooling hole 110b can have a flow score of 54.

It is also contemplated that a flow score can be determined for each thermographic image obtained during the multiple pulses of air at the sampling frequency. The multiple sample flow scores indicative of the multiple pulses can be averaged to calculate the flow score.

In summary, the flow score for each of the first, second, third, and fourth cooling holes 100a, 100b, 100c, 100d can be based on one or more of calculations and/or comparisons by the temporal module 128, the spatial module 132, the controller 124, or any combination thereof. The flow score can be based on the comparison of distribution of temperature indicated by intensity compared to a reference distribution of temperature or intensity. A numerical output based, at least in part, on a difference between the flow score of the cooling holes the first, second, third, and fourth cooling holes 100a, 100b, 100c, 100d and the reference flow score can be displayed at the output device 130.

The output device 130 can visually display the thermographic data subset and one or more numerical values, or any combination thereof. The one or more numerical values can include one or more of the flow score for each of the first, second, third, or fourth cooling holes 100a, 100b, 100c, 100d, a number based on the flow score for each of the first, second, third, or fourth cooling holes 100a, 100b, 100c, 100d, a difference between the flow score and a reference score for each of the first, second, third, or fourth cooling holes 100a, 100b, 100c, 100d, a comparison of intensity differences within the thermographic data subset, or any combination thereof.

The numerical value can be indicative of a blockage percentage of the first, second, third, or fourth cooling holes 100a, 100b, 100c, 100d. More specifically, the numerical value can be indicative of a blockage percentage of the metering portion 114, the diffusion portion 116, or the metering portion 114 and the diffusion portion 116 of the first, second, third, or fourth cooling holes 100a, 100b, 100c, 100d.

The orientation of the viewing plane 140 of the thermographic sensor 126 to the outlet centerlines 110a, 110b, 110c, 110d and/or the cooling hole centerlines 108a, 108b, 108c, 108d provides the benefit of inspection into at least a part of the cooling passage 102a, 102b, 102c, 102d. That is, the thermographic sensor 126 in the orientation described herein can gather thermographic data from at least a portion of the cooling passage 102a, 102b, 102c, 102d by aligning with the outlets 95a, 95b, 95c, 95d in such a way that at least a portion of the cooling passage 102a, 102b, 102c, 102d that extends into the component is visible. This benefit allows for detection of lower percentage blockages. That is, for example, blockages as low as 3% within the cooling passage 102a, 102b, 102c, 102d can be detected.

When the orientation of the viewing plane 140 of the thermographic sensor 126 to the outlet centerlines 110a, 110b, 110c, 110d and/or the cooling hole centerlines 108a, 108b, 108c, 108d is in a range from 60° to 120°, at least a portion of the cooling passage 102a, 102b, 102c, 102d past the outlet 95a, 95b, 95c, 95d is visible to the thermographic sensor 126.

When the orientation of the viewing plane 140 of the thermographic sensor 126 to the outlet centerlines 110a, 110b, 110c, 110d and/or the cooling hole centerlines 108a, 108b, 108c, 108d is in a range from 80° to 100°, the percentage of the cooling passage 102a, 102b, 102c, 102d in which blockages can be detected further increases. For example, at least a portion of the diffusion portion 116, the metering portion 114, or combination thereof in the cooling passage 102a, 102b, 102c, 102d is represented in an image collected by the thermographic sensor 126.When the orientation of the viewing plane 140 of the thermographic sensor 126 to the outlet centerlines 110a, 110b, 110c, 110d and/or the cooling hole centerlines 108a, 108b, 108c, 108d is orthogonal, the percentage of the cooling passage 102a, 102b, 102c, 102d visible for detection can further increase. That is, an image collected using the orthogonal orientation can include additional detail of a greater portion of the diffusion portion 116, the metering portion 114, or combination thereof.

A blockage percentage, for example a blockage of 30%, as used herein, indicates that one or more cross-sectional areas taken perpendicular to the cooling hole centerlines 108a, 108b, 108c, 108d is 30% covered or blocked. That is, airflow anomalies can be indicated by the fourth range 308 which can indicate a blockage in the cooling passage 102a, 102b, 102c, 102d. The percent blockage can then be determined at the controller 124, the spatial module 132, the temporal module 128, or a combination thereof.

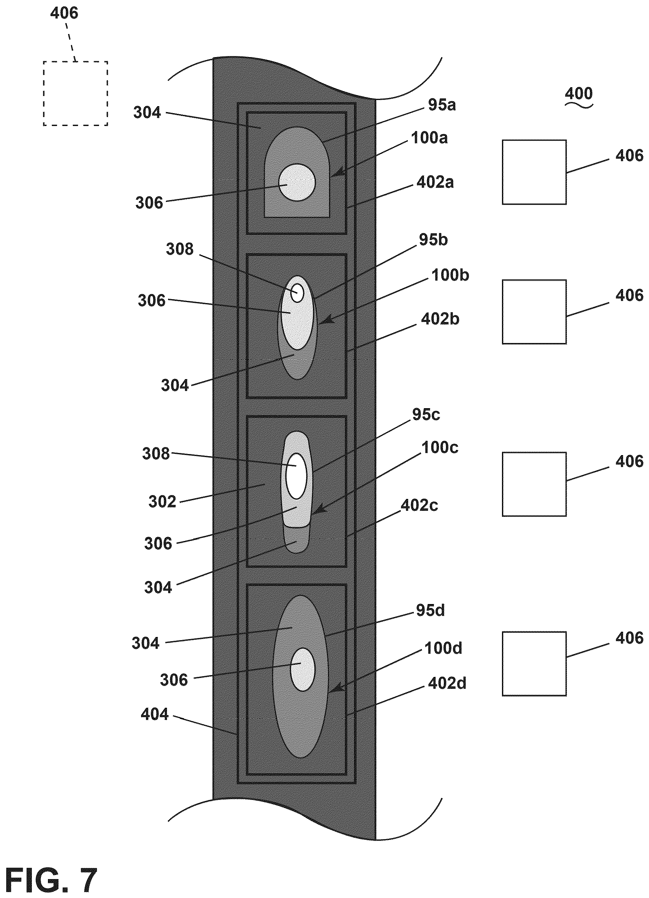

FIG. 7 illustrates an example of an output 400 visually displayed by the output device 130 (FIG. 4). The output 400 can include a representative image of the thermographic data. A frame, illustrated as first, second, third, and fourth frames 402a, 402b, 402c, 402d surrounds at least an outlet illustrated as the outlets 95a, 95b, 95c, 95d and defines the thermographic data subset of the thermographic data considered for each of the first, second, third, or fourth cooling hole 100a, 100b, 100c, 100d. The first, second, third, and fourth frames 402a, 402b, 402c, 402d can be determined using a spatial module during or after the obtaining of the thermographic data. The first, second, third, and fourth frames 402a, 402b, 402c, 402d can be visually displayed concurrently or a user can select to display an individual frame. The frame can be a rectangular outline as illustrated; however, any shape is contemplated.

The frames 402a, 402b, 402c, 402d can include a frame color indicative of the flow score of the first, second, third, or fourth cooling hole 100a, 100b, 100c, 100d. The color can be included in the rectangular outline, wherein the color of the rectangular outline is indicative of the flow rate of the enclosed the first, second, third, or fourth cooling hole 100a, 100b, 100c, 100d. Alternatively the frame color can be a highlighting of the area enclosed by the first, second, third, or fourth frame 402a, 402b, 402c, 402d. The highlighting can be transparent so that the first, second, third, or fourth ranges 302, 304, 306, 308 are still visible to the user.

By way of non-limiting example, consider the third cooling hole 100c outlined by the third frame 402c. The third cooling hole 100c includes a portion in the fourth range 308 which can indicate increased airflow.

The flow score accounts for intentionality of flow rate, therefore the frame color of the third frame 402c is based, at least in part, on the flow score of the third cooling hole 100c. The third frame 402c can have a frame color of red, indicating, for example, that the flow rate of the third cooling hole 100c is within a predetermined range or beyond a predetermined threshold for the third cooling hole 100c indicative of a blockage of 60% or more.

The first and fourth frames 402a, 402d can have a frame color of blue, indicating, for example, that the flow rate of the first and fourth cooling holes 100a, 100d is within a predetermined range or above/below a predetermined threshold for first and fourth cooling holes 100a, 100d indicative of intended flow.

The second frame 402b can have a frame color of yellow, indicating, for example, that the flow rate of the second cooling hole 100b is within a predetermined range or above/below a predetermined threshold for second cooling hole 100b indicative of a blockage of greater than or equal to 3% and less than 60%.

Any number of frame colors are contemplated corresponding to any number of blockage ranges, including two, where the frame color corresponds to the flow rate of the cooling hole within the frame.

Numerical outputs 406 can be provided or selectively provided in the output 400 based on a selection by the user. The numerical outputs 406 can include the one or more numerical values, where the one or more numerical values can include one or more of the flow score for each of the first, second, third, or fourth cooling holes 100a, 100b, 100c, 100d, a number based on the flow score for each of the first, second, third, or fourth cooling holes 100a, 100b, 100c, 100d, a difference between the flow score and a reference score for each of the first, second, third, or fourth cooling holes 100a, 100b, 100c, 100d, a comparison of intensity differences within the thermographic data subset, or any combination thereof.

A mask 404 includes the frames 402a, 402b, 402c, 402d. That is, the mask 404 is provided around the frames 402a, 402b, 402c, 402d. While illustrated as including four frames, the mask 404 can include any number of frames, including one.

Optionally, one of the numerical outputs 406 provided in the output 400 can be a mask score. The mask score can be based on the flow scores of the first, second, third, and fourth cooling holes 100a, 100b, 100c, 100d. A mask color is determined by the mask score or a comparison of the mask score and a predetermined threshold. Similar to the frame color, the mask color can have at least a first color corresponding to a mask score within a predetermined range or above/below a predetermined threshold, as desired, and a second color indicating the mask score is outside the pre-determined range or above/below the predetermined threshold or range opposite that of the first color. For example, if the first predetermined threshold was less than 3% and the comparison of the mask score and the predetermined threshold was indicative of the first, second, third, or fourth cooling holes 100a, 100b, 100c, 100d having a flow score indicative of less than 3% blockage for each, the mask score could correspond to a green color. If a second predetermined threshold was greater 3% and less than 5% and the comparison of the mask score and the predetermined threshold was indicative of one or more of the first, second, third, or fourth cooling holes 100a, 100b, 100c, 100d having a flow score indicative of greater 3% and less than 5% blockage, the mask score could correspond to a yellow color. For example, if the third predetermined threshold was greater than 5% and the comparison of the mask score and the predetermined threshold was indicative of the first, second, third, or fourth cooling holes 100a, 100b, 100c, 100d having a flow score indicative of greater than 5% blockage in one or more of the first, second, third, or fourth cooling holes 100a, 100b, 100c, 100d, the mask score could correspond to a red color.

Benefits of aspects disclosed herein, include improved detection of debris or manufacturing outside of a pre-determined threshold. For example, as low as 3% blockage can shorten a lifetime of an engine component. The traditional methods looking only at the area surrounding an outlet or exit do not detect blockage of 60% or less of the diffusion portion or metering portion in the cooling passage. Therefore, inspection using the system and method described herein provides components with a longer life by being able to identify blockages in the cooling passage and detecting blockages at lower percentage.

The inspection method also provides an output to the user that quickly identifies cooling holes with flow scores in different pre-determined ranges. The speed at which multiple cooling holes can be inspected with results provided in an output to the user can decrease time required to inspect the engine component. That is, a mask color of red can quickly indicate that the component required repair or the manufacturing process required adjustment. The cooling hole or cooling holes requiring repair or change in manufacturing process can be further identified by the frame color, which can be red or any other color corresponding to blockage. The mask and the frame allow for quick visual assessment of the component.

While the inventive subject matter has been described with regard to the calculation of a performance score for a turbine blade, the inventive subject matter can be used to detect defects or rate performance of any type of component that includes holes or channels formed through the workpiece. The inventive subject matter is not limited to the specific aspects described and illustrated herein. Different aspects and adaptations besides those shown herein and described, as well as many variations, modifications and equivalent arrangements will now be apparent or will be reasonably suggested by the foregoing specification and drawings, without departing from the substance or scope of the inventive subject matter.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects of the disclosure are provided by the subject matter of the following clauses:
A method of imaging a turbine engine component with a thermographic sensor, the turbine engine component having a first surface and a second surface spaced from the first surface, and a plurality of cooling holes with inlets formed in the second surface and outlets formed in the first surface, the method comprising flowing air through the turbine engine component, wherein at least a portion of the air enters a cooling hole of the plurality of cooling holes at the inlet at the first surface, and exits the turbine engine component at the outlet of the cooling hole at the second surface, obtaining, during the flowing of the air, thermographic data, wherein the thermographic data for the cooling hole is obtained when the turbine engine component and the thermograph sensor are positioned such that a viewing plane of the thermographic sensor and a centerline of the outlet or a centerline of the cooling hole form an angle in a range between 60° and 120°, determining a subset of the thermographic data that corresponds to the cooling hole to obtain a thermographic data subset, calculating a flow score for the cooling hole based on the thermographic data subset, and visually displaying the thermographic data subset and one or more of the flow score, a difference between the flow score and a reference score, or a comparison of intensity differences of the thermographic data subset.

The method of any preceding clause, wherein the visually displaying is in the form of a frame that surrounds at least the outlet of the cooling hole and defines the thermographic data subset of the thermographic data for the cooling hole.

The method of any preceding clause, wherein the frame includes a frame color indicative of the flow score of the cooling hole.

The method of any preceding clause, wherein the visually displaying further includes selectively providing a numerical value based on the flow score of the cooling hole.

The method of any preceding clause, wherein the numerical value is indicative of a blockage percentage of the cooling hole.

The method of any preceding clause, wherein a location of the frame is determined using a spatial module during or after the obtaining of the thermographic data.

The method of any preceding clause, wherein the calculating the flow score for the cooling hole further comprises comparing intensity differences within the thermographic data subset.

The method of any preceding clause, wherein the visually displaying the thermographic data subset further comprises displaying a numerical output based, at least in part, on the comparing intensity differences within the thermographic data subset.

The method of any preceding clause, further comprising comparing the flow score of the cooling hole to a reference flow score and displaying a numerical output based, at least in part, on a difference between the flow score of the cooling hole and the reference flow score.

The method of any preceding clause, wherein the obtaining of the thermographic data further comprises obtaining the thermographic data for a subset of cooling holes when the turbine engine component and the thermograph sensor are positioned such that centerlines of the outlets or the centerlines of the cooling holes of the subset of cooling holes are orthogonal to the viewing plane of the thermographic sensor.

The method of any preceding clause, wherein the determining the subset of the thermographic data further comprises determining the thermographic data subset for each cooling hole of the subset of cooling holes, and the calculating includes calculating the flow score for each cooling hole of the subset of cooling holes based on the thermographic data subset for each cooling hole of the subset of cooling holes.

The method of any preceding clause, wherein the visually displaying includes concurrently visually displaying, using frames, the thermographic data subset for each cooling hole of the subset of cooling holes.

The method of any preceding clause, further comprising providing a mask around the frames of the subset of cooling holes.

The method of any preceding clause, further comprising determining a mask score based on the flow scores of the subset of cooling holes, wherein a mask color is determined by the mask score or a comparison of the mask score and a predetermined threshold.

The method of any preceding clause, wherein displaying the thermographic data further comprises proving a numerical output for each cooling hole of the subset of cooling holes based on the flow score for each cooling hole of the subset of cooling holes.

The method of any preceding clause, wherein the flowing the air through the turbine engine component includes multiple pulses of air at a predetermined pulse frequency.

The method of any preceding clause, wherein the obtaining the thermographic data further comprises obtaining the thermographic data during the multiple pulses of air at a sampling frequency based on the predetermined pulse frequency.

The method of any preceding clause, wherein the calculating the flow score further comprises averaging the thermographic data obtained during the multiple pulses of air at the sampling frequency to calculate the flow score.

The method of any preceding clause, further comprising storing thermographic images captured by the thermographic sensor.

The method of any preceding clause, further comprising comparing the flow score to a reference flow score.

The method of any preceding clause, wherein the visually displaying the thermographic data subset includes a numerical value indicative of a blockage percentage of the cooling hole.

The method of any preceding clause, wherein the cooling hole includes a metering portion and a diffusion portion.

The method of any preceding clause, wherein the visually displaying the thermographic data subset includes a numerical value indicative of a blockage percentage of the metering portion, the diffusion portion, or the metering portion and the diffusion portion of the cooling hole.

The method of any preceding clause, wherein the flowing air through the turbine engine component further comprises cooling or heating the flowing air prior to or during the flowing of the air.

The method of any preceding clause, wherein the flowing air through the turbine engine component further comprises cooling or heating the turbine engine component prior to or during the flowing of the air.

The method of any preceding clause, wherein the thermographic data for the cooling hole is obtained when the turbine engine component and the thermograph sensor are positioned such that the viewing plane of the thermographic sensor and the centerline of the outlet or the centerline of the cooling hole form an angle in a range between 80° and 100°.

The method of any preceding clause, wherein the thermographic data for the cooling hole is obtained when the turbine engine component and the thermograph sensor are positioned such that the viewing plane of the thermographic sensor and the centerline of the outlet or the centerline of the cooling hole are orthogonal.

An inspection system comprising a pump assembly fluidly coupled to the turbine engine component, a thermographic sensor, an output device, and a controller configured to execute the method of any preceding clause.

An inspection system comprising a thermographic sensor, an output device, and a controller configured to execute the method of any preceding clause for imaging the turbine engine component.

## Claims

1. A method (200) of imaging a turbine engine component (68) with a thermographic sensor (126), the turbine engine component (68) having a first surface (86) and a second surface (89) spaced from the first surface (86), and a plurality of cooling holes (92, 100, 100a, 100b, 100c, 100d) with inlets (94, 94a, 94b, 94c, 94d) formed in the second surface (89) and outlets (95, 95a, 95b, 95c, 95d) formed in the first surface (86), the method (200) comprising:
flowing air (202) through the turbine engine component (68), wherein at least a portion of the air enters a cooling hole (92, 100, 100a, 100b, 100c, 100d) of the plurality of cooling holes (92, 100, 100a, 100b, 100c, 100d) at the inlet (94, 94a, 94b, 94c, 94d) at the first surface (86), and exits the turbine engine component (68) at the outlet (95, 95a, 95b, 95c, 95d) of the cooling hole (92, 100, 100a, 100b, 100c, 100d) at the second surface (89);
obtaining, during the flowing of the air (202), thermographic data (204), wherein the thermographic data for the cooling hole (92, 100, 100a, 100b, 100c, 100d) is obtained when the turbine engine component (68) and the thermograph sensor (126) are relatively orientated such that a viewing plane (140) of the thermographic sensor (126) and a centerline (110a, 110b, 100c, 110d) of the outlet (95, 95a, 95b, 95c, 95d) or a centerline (108a, 108b, 108c, 108d) of the cooling hole (92, 100, 100a, 100b, 100c, 100d) form an angle (152) in a range between 60° and 120°;
determining a subset (206) of the thermographic data that corresponds to the cooling hole (92, 100, 100a, 100b, 100c, 100d) to obtain a thermographic data subset;
calculating a flow score (208) for the cooling hole (92, 100, 100a, 100b, 100c, 100d) based on the thermographic data subset; and
visually displaying (210) the thermographic data subset, the flow score, or the thermographic data subset and the flow score.

2. The method (200) of claim 1, wherein the visually displaying (210) is in the form of a frame (402a, 402b, 402c, 402d) that surrounds at least the outlet (95, 95a, 95b, 95c, 95d) of the cooling hole (92, 100, 100a, 100b, 100c, 100d) and defines the thermographic data subset of the thermographic data for the cooling hole (92, 100, 100a, 100b, 100c, 100d).

3. The method (200) of claim 2, wherein the frame (402a, 402b, 402c, 402d) includes a frame color indicative of the flow score of the cooling hole (92, 100, 100a, 100b, 100c, 100d).

4. The method (200) of claim 3, wherein the visually displaying (210) further includes selectively providing a numerical value (406) based on the flow score of the cooling hole (92, 100, 100a, 100b, 100c, 100d).

5. The method (200) of claim 4, wherein the numerical value (406) is indicative of a blockage percentage of the cooling hole (92, 100, 100a, 100b, 100c, 100d).

6. The method (200) of any of claims 2 to 5, wherein a location of the frame (402a, 402b, 402c, 402d) is determined using a spatial module (132) during or after the obtaining of the thermographic data (204).

7. The method (200) of any of claims 1 to 6, wherein the calculating the flow score (208) for the cooling hole (92, 100, 100a, 100b, 100c, 100d) further comprises comparing intensity differences within the thermographic data subset.

8. The method (200) of claim 7, wherein the visually displaying (210) the thermographic data subset further comprises displaying a numerical output (406) based, at least in part, on the comparing intensity differences within the thermographic data subset.

9. The method (200) of any of claims 1 to 8, further comprising comparing the flow score of the cooling hole (92, 100, 100a, 100b, 100c, 100d) to a reference flow score and displaying a numerical output (406) based, at least in part, on a difference between the flow score of the cooling hole (92, 100, 100a, 100b, 100c, 100d) and the reference flow score.

10. The method (200) of any of claims 1 to 9, wherein the obtaining of the thermographic data (204) further comprises obtaining the thermographic data for a subset of cooling holes when the turbine engine component (68) and the thermograph sensor are relatively orientated such that centerlines (110a, 110b, 100c, 110d) of the outlets (95, 95a, 95b, 95c, 95d) or the centerlines (108a, 108b, 108c, 108d) of the cooling holes (92, 100, 100a, 100b, 100c, 100d) of the subset of cooling holes (92, 100, 100a, 100b, 100c, 100d) are orthogonal to the viewing plane (140) of the thermographic sensor (126).

11. The method (200) of claim 10, wherein the determining the subset of the thermographic data (206) further comprises determining the thermographic data subset for each cooling hole (92, 100, 100a, 100b, 100c, 100d) of the subset of cooling holes (92, 100, 100a, 100b, 100c, 100d), and the calculating (208) includes calculating the flow score for each cooling hole (92, 100, 100a, 100b, 100c, 100d) of the subset of cooling holes (92, 100, 100a, 100b, 100c, 100d) based on the thermographic data subset for each cooling hole (92, 100, 100a, 100b, 100c, 100d) of the subset of cooling holes (92, 100, 100a, 100b, 100c, 100d).

12. The method (200) of claim 11, wherein the visually displaying (210) includes concurrently visually displaying, using frames (402a, 402b, 402c, 402d), the thermographic data subset for each cooling hole (92, 100, 100a, 100b, 100c, 100d) of the subset of cooling holes (92, 100, 100a, 100b, 100c, 100d).

13. The method (200) of claim 12, further comprising providing a mask (404) around the frames (402a, 402b, 402c, 402d) of the subset of cooling holes and determining a mask score based on the flow scores of the subset of cooling holes (92, 100, 100a, 100b, 100c, 100d), wherein a mask color is determined by the mask score or a comparison of the mask score and a predetermined threshold.

14. The method (200) of claim 12 or 13, wherein displaying the thermographic data (210) further comprises proving a numerical output (406) for each cooling hole (92, 100, 100a, 100b, 100c, 100d) of the subset of cooling holes (92, 100, 100a, 100b, 100c, 100d) based on the flow score for each cooling hole (92, 100, 100a, 100b, 100c, 100d) of the subset of cooling holes (92, 100, 100a, 100b, 100c, 100d).

15. The method (200) of any of claims 1 to 14, wherein the flowing the air (202) through the turbine engine component (68) includes multiple pulses of air at a predetermined pulse frequency.
